# FASCICULE DE BREVET EUROPEEN

(11) **EP 2 207 709 B1**
(45) Date de publication et mention de la délivrance du brevet: **28.08.2013**
(21) Numéro de dépôt: 08854889.6
(22) Date de dépôt: 06.11.2008
(51) Int. Cl.: B62D 25/08, B60R 19/02

(54) **VEHICULE AUTOMOBILE COMPORTANT UNE TRAVERSE UNE FACE AVANT TECHNIQUE ET UN CONVERGENT FIXES LES UNS SUR LES AUTRES**
AUTOMOBIL MIT EINER QUERSTANGE, EINER TECHNISCHEN VORDERFLÄCHE UND EINEM KONVERGIERENDEN ELEMENT, DIE MITEINANDER VERBUNDEN SIND
AUTOMOBILE COMPRISING A CROSSBAR, A TECHNICAL FRONT SURFACE AND A CONVERGENT ELEMENT ATTACHED TO EACH OTHER

(30) Priorité: 08.11.2007 FR 0758888
(43) Date de publication de la demande: 21.07.2010
(73) Titulaire: Renault S.A.S., 92100 Boulogne-Billancourt (FR)
(72) Inventeur: CHALLAL, Hicham, F-78000 Versailles (FR); FLANDIN, Mickael, F-28410 Broue (FR)
(86) Numéro de dépôt international: PCT/FR2008/052009
(87) Numéro de publication internationale: WO 2009/068794

(56) Documents cités:
- EP-A- 1 142 776
- EP-A- 1 506 907
- EP-A- 1 698 520
- EP-A- 1 902 928
- WO-A-2005/105552

## Description

### DOMAINE TECHNIQUE GENERAL

La présente invention concerne un véhicule automobile comportant une traverse inférieure comportant des bras longitudinaux reliés, grâce à des liaisons, à des longerons du véhicule situés au-dessus desdits bras, une face avant technique formant une plaque, la plaque présentant une face interne et une face externe, et étant destinée à être fixée à un élément de structure du véhicule, un convergent de bouclier comportant deux éléments absorbeurs aptes à absorber, par leur déformation, une énergie d'un choc sur le véhicule, chaque bras longitudinal de la traverse étant fixé par une première fixation sur la face interne de la plaque, et chaque élément absorbeur étant fixé par une deuxième fixation sur la face externe de la plaque, de sorte que les deux éléments absorbeurs soient aptes à se déformer selon un axe longitudinal du véhicule lors d'un choc.

### ETAT DE L'ART

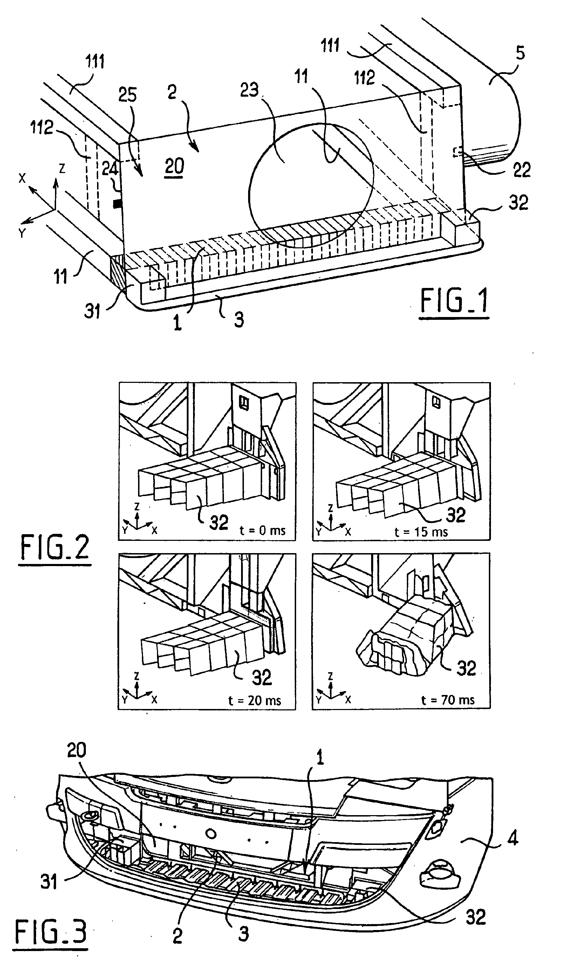

La figure 1 représente très schématiquement une partie avant d'un véhicule automobile comportant une traverse inférieure 1, comportant des bras longitudinaux 11, reliés à des longerons 111 du véhicule, situés au-dessus desdits bras longitudinaux, par des liaisons 112. La traverse 1 est apte à être placée sous un radiateur du véhicule.

Le véhicule comporte également une face avant technique 2 ou « f.a.t.». La face avant technique est dite « structurelle » car elle forme ici une façade avant technique importante, supportant des éléments refroidissants tels que le radiateur et son hélice et/ou le condenseur par exemple. De plus, la f.a.t. 2 apporte une raideur supplémentaire au châssis du véhicule.

A cet effet, la f.a.t. 2 forme une plaque 20 pouvant comporter au moins une ouverture 23.

La plaque 20 présente une face interne 24 et une face externe 25. Des éléments de fixation 21 et 22 permettent à la plaque 20 d'être fixée à un élément de structure 5 du véhicule.

L'ouverture 23 est destinée à supporter une hélice du radiateur.

Comme le montre la figure 1, le véhicule comporte également un élément convergent renforcé inférieur de bouclier 3 (ou « spoiler » selon la terminologie anglo-saxonne généralement utilisée par l'homme du métier), ou convergent de bouclier, comportant sur ses parties latérales deux éléments 31 et 32 absorbeurs.

Les éléments absorbeurs (ou « crash box » selon la terminologie anglo-saxonne généralement utilisée par l'homme du métier) sont aptes, comme le montre schématiquement la figure 2, à absorber, par leur déformation, une énergie d'un choc sur l'avant du véhicule.

Par ailleurs, les véhicules automobiles doivent répondre aux normes en vigueur. Ces dernières prévoient, entre autres, un « choc à faible vitesse » (4/6 km/h), un « choc piéton » (40 km/h) par la voie basse (la voie basse regroupe la traverse, la face avant technique et le convergent) et un « choc à vitesse intermédiaire » ou « prestation Danner » à 9-16 km/h).

La voie basse doit transmettre des efforts lors d'un choc et absorber une partie de l'énergie, afin de minimiser la déformation d'un maximum de pièces composant la façade avant du véhicule, comme par exemple le calculateur du moteur, les organes électriques ou les supports de la traverse inférieure.

Cependant, la voie basse connue et représentée à la figure 1 ne permet pas de répondre de façon satisfaisante aux normes en vigueur, notamment du fait de la déformation des éléments absorbeurs selon l'axe Z, comme le montre la figure 2. Une telle déformation selon l'axe Z entraîne une détérioration des pièces composant la façade avant du véhicule, notamment lors du choc à vitesse intermédiaire.

A cet effet, le document EP 1 698 520 décrit un véhicule automobile, comme décrit en référence aux figures 1 et 2, dont les éléments absorbeurs sont réalisés sous la forme de boîtiers anticollision et sont vissés à la plaque, de sorte que les deux éléments absorbeurs soient aptes à se déformer selon un axe longitudinal du véhicule lors d'un choc.

Cependant, une telle configuration du véhicule automobile ne permet pas une déformation optimale des éléments absorbeurs selon l'axe longitudinal du véhicule et peut entraîner également une détérioration des pièces lors d'un choc.

### PRESENTATION DE L'INVENTION

L'invention propose de pallier à l'ensemble des inconvénients précités.

A cet effet, l'invention propose un véhicule automobile comportant
- une traverse inférieure comportant des bras longitudinaux reliés, grâce à des liaisons, à des longerons du véhicule situés au-dessus desdits bras,
- une face avant technique formant une plaque, la plaque présentant une face interne et une face externe, et étant destinée à être fixée à un élément de structure du véhicule,
- un convergent de bouclier comportant deux éléments absorbeurs aptes à absorber, par leur déformation, une énergie d'un choc sur le véhicule,
- chaque bras longitudinal de la traverse étant fixé par une première fixation sur la face interne de la plaque, et
- chaque élément absorbeur étant fixé par une deuxième fixation sur la face externe de la plaque,
de sorte que les deux éléments absorbeurs soient aptes à se déformer selon un axe longitudinal du véhicule lors d'un choc,
le véhicule étant caractérisé en ce que
- la face interne comporte des nervures et au moins une zone plane présentant un orifice,
- le bras est muni d'une platine comportant un appui comportant au moins une zone plane, apte à coopérer avec la zone plane de la face interne, et présentant également un orifice,
le véhicule comportant en outre au moins un boulon comportant une vis et un écrou pour former la première fixation, la première fixation maintenant en contact étroit la face interne et l'appui grâce à la vis passant par les orifices, et
- la face externe comporte une zone plane comportant au moins un renfoncement présentant un fond plan correspondant à la zone plane de la face interne, de sorte qu'une tête de la vis soit en retrait par rapport au niveau de la zone plane de la face externe.

L'invention est avantageusement complétée par les caractéristiques suivantes, prises seules ou en une quelconque de leur combinaison techniquement possible :
- un axe de chaque boulon de la première fixation est un axe longitudinal du véhicule ;
- la face externe comporte au moins une zone plane (251) et au moins un ergot plan présentant un orifice, chaque élément absorbeur comportant une zone plane apte à coopérer avec la zone plane de la face externe et au moins une ailette apte à coopérer avec l'ergot et présentant également un orifice, le véhicule comportant en outre au moins un boulon comportant une vis et un écrou pour former la deuxième fixation, la deuxième fixation maintenant en contact étroit l'ergot et l'ailette grâce à la vis passant par les orifices, et par conséquent maintenant en contact étroit la face externe et l'élément absorbeur ;
- chaque boulon de la deuxième fixation est un axe vertical du véhicule ;
- la première fixation et la deuxième fixation ne présentent pas de jeu ;
- la tête de la vis de la première fixation est placée au niveau de la zone plane de l'élément absorbeur ;

La déformation des éléments absorbeurs est telle que le véhicule réponde aux normes en vigueur pour un choc de petite vitesse et un choc de moyenne vitesse.

L'invention présente de nombreux avantages.

La face avant technique présente une raideur satisfaisante et assure ainsi la stabilité du déporteur lors de sa déformation.

Du fait de la fixation de la traverse sur la face avant technique et de la fixation de chaque élément absorbeur sur la face avant technique également, les deux éléments absorbeurs sont aptes à se déformer selon un axe longitudinal du véhicule lors d'un choc, et non plus selon un axe vertical du véhicule. La déformation du déporteur est donc satisfaisante, ce qui permet de répondre aux normes en vigueur concernant le choc à faible vitesse et le choc à vitesse intermédiaire et permet également d'éviter la destruction, notamment de la traverse lors d'un choc.

Les nervures sont placées sur la face interne de la plaque, afin d'éviter le contact nervure/nervure entre la surface externe et l'élément absorbeur, ce qui permet une meilleure déformation de l'élément absorbeur lors du choc.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, représente schématiquement une vue en perspective d'une façade avant technique connue de l'état de l'art ;
- la figure 2, déjà commentée, représente schématiquement la déformation d'un élément absorbeur faisant partie du convergent visible à la figure 1 lors d'un choc ;
- la figure 3 représente schématiquement une vue en perspective de la façade avant d'un véhicule selon l'invention ;
- les figures 4A et 4B représentent schématiquement respectivement une vue avant et arrière en perspective de la fixation entre la face avant technique selon l'invention et la traverse selon l'invention ;
- les figure 5A et 5B représentent schématiquement respectivement une vue avant en perspective et une vue de dessous d'une fixation entre la f.a.t. selon l'invention et le déporteur selon l'invention ;
- la figure 6 représente schématiquement la déformation d'un élément absorbeur selon l'invention ; et
- la figure 7 représente schématiquement une vue en perspective d'une face avant technique selon l'invention.

Sur l'ensemble des figures les éléments similaires portent des références numériques identiques.

### DESCRIPTION DETAILLEE

Les figures 3, 4A, 4B, 5A et 5B montrent schématiquement qu'un véhicule automobile selon l'invention comporte principalement une traverse inférieure 1 pouvant porter un radiateur du véhicule.

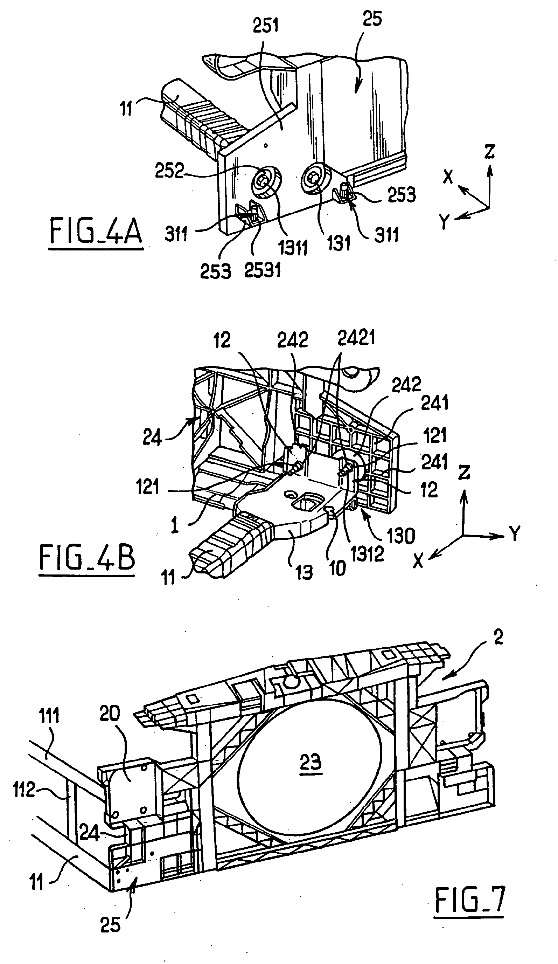

Le véhicule comporte également une f.a.t. 2 formant une plaque 20 comportant au moins une ouverture 23. La f.a.t. 2 est plus précisément représentée sur la figure 7.

La plaque 20 présente une face interne 24 et une face externe 25. Classiquement, la plaque 20 est destinée à être fixée à un élément de structure du véhicule.

L'ouverture 23 est classiquement destinée à supporter une hélice du radiateur.

Le véhicule comporte également un convergent 3 comportant sur ses parties latérales deux éléments 31 et 32 absorbeurs. Les éléments absorbeurs 31 et 32 sont aptes à absorber, par leur déformation, une énergie d'un choc sur le véhicule. Les absorbeurs 31 et 32 sont venus de matière sur la partie latérale du déporteur.

Le convergent 3 est classiquement lié à un bouclier avant 4 du véhicule, comme le montre la figure 3.

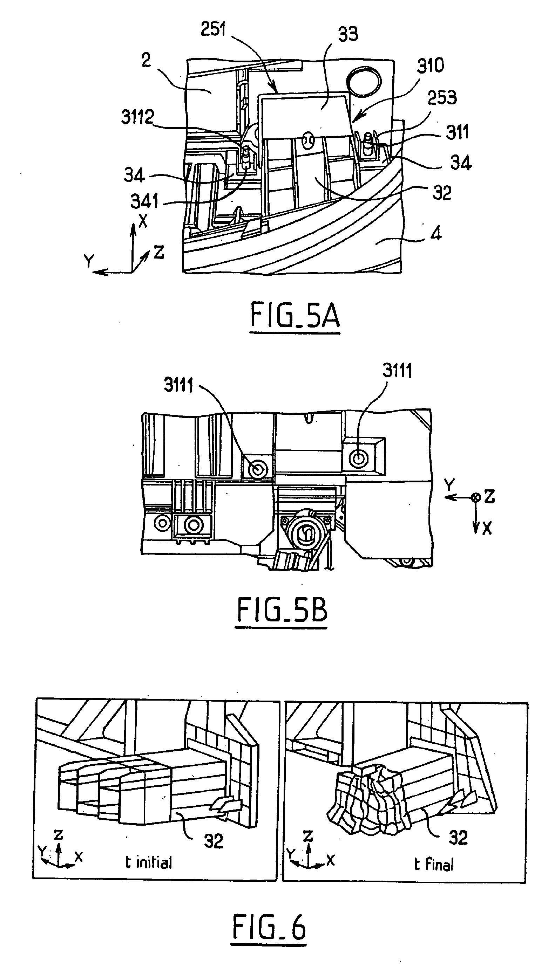

Selon l'invention et comme le montrent plus précisément les figures 4A, 4B, 5A et 5B, la traverse 1 est fixée sur la f.a.t. 2 par l'intermédiaire de bras longitudinaux 11 au moyen d'une platine 13 maintenue par une première fixation 130 sur la face interne 24 de la plaque 20. Chaque élément absorbeur 31 ou 32 est fixé par une deuxième fixation 310 sur la face externe 25 de la plaque 20.

De telles fixations 130 et 310 permettent à l'ensemble formé par la traverse 1, la f.a.t. 2, et le convergent 3 d'avoir une certaine raideur, raideur qui permet une déformation des éléments absorbeurs 31 et 32 selon un axe longitudinal X du véhicule lors d'un choc.

Comme le montrent plus précisément les figures 4A et 4B, la face interne 24 comporte des nervures 241.

Les nervures 241 forment sensiblement un quadrillage par exemple, et s'étendent perpendiculairement à la face interne 24. Les nervures 241 sont préférentiellement venues de matière sur la face interne.

La face interne 24 comporte cependant également au moins une zone plane 242 présentant au moins un orifice 2421.

Par ailleurs, la platine 13 comporte un appui 10 comportant au moins une zone plane 12.

La zone plane 12 est apte à coopérer avec la zone plane 242 de la face interne 24 et présente également un orifice 121.

Le véhicule comporte en outre au moins un boulon 131 comportant classiquement une vis 1311 et un écrou 1312. Chaque boulon 131 forme ainsi la première fixation 130. Cette dernière maintient ainsi en contact étroit la face interne 24 et l'appui 10, grâce à la vis 1311 passant par les orifices 2421 et 121 lors du serrage de l'écrou 1312.

Comme dans tout véhicule automobile, il existe des contraintes de montage de la traverse, de la f.a.t. et du convergent. Afin de répondre à ces contraintes de montage, la face externe 25 comporte une zone plane 251 comportant au moins un renfoncement 252 présentant un fond plan. Le fond plan correspond à la zone plane 242 de la face interne 24.

Ainsi, une tête de la vis 1311 est en retrait, une fois montée, par rapport au niveau de la zone plane 251 de la face externe 25. Le déporteur peut donc être ensuite monté sur la face externe 25. On remarque ainsi sur les figures que la tête de la vis 1311 de la première fixation est placée au niveau de la zone plane 33 de l'élément absorbeur 31 ou 32, ce qui est rendu possible grâce à la présence du renfoncement 252. Les contraintes de montage sont donc respectées.

Un axe de chaque boulon 131 de la première fixation 130 est un axe longitudinal X du véhicule.

Comme le montrent plus précisément les figures 5A et 5B, la face externe 25 comporte en plus de la zone plane 251, au moins un ergot 253 plan présentant un orifice 2531. Préférentiellement, l'ergot 253 est venu de matière sur la surface plane 251.

Chaque élément absorbeur 31 ou 32 comporte quant à lui au moins une zone plane 33, apte à coopérer avec la zone plane 251 de la face externe 25.

Chaque élément absorbeur 31 ou 32 comporte également au moins une ailette 34 apte à coopérer avec l'ergot 253 et présentant également un orifice 341. Préférentiellement, chaque ailette 34 est venue de matière sur l'élément absorbeur.

De même que précédemment, le véhicule comporte au moins un boulon 311 comportant classiquement une vis 3111 et un écrou 3112, pour former la deuxième fixation 310. Cette dernière maintient en contact étroit l'ergot 253 et l'ailette 34 grâce à la vis 3111 passant par les orifices 2531 et 341 lors du serrage de l'écrou 3112. Par conséquent, la deuxième fixation 310 maintient en contact étroit la face externe 25 et l'élément absorbeur 31 ou 32.

Chaque boulon 311 de la deuxième fixation 310 s'étend préférentiellement selon un axe vertical Z du véhicule.

Comme on peut le distinguer sur les figures, chaque première fixation 130 comporte deux boulons 131 placés en position centrale et chaque deuxième fixation 310 comporte également deux boulons 311 disposés de part et d'autre des boulons 131 centraux.

Chaque fixation 131 ou 310 est sans jeu, ce qui est facilité par le fait que les contacts entre les éléments à fixer (c'est-à-dire la traverse inférieure 1 et la f.a.t. 2 d'une part et la f.a.t. 2 et le déporteur 3 d'autre part) se font par l'intermédiaire de surfaces planes 242, 12, 251, et 33.

De plus, les nervures 241 sont placées sur la face interne 24 de la plaque 20 afin d'éviter le contact nervure/nervure entre la surface externe 25 et l'élément absorbeur 31 ou 32, ce qui permet une meilleure déformation de l'élément absorbeur lors du choc (voir la figure 6).

## Revendications

1. Véhicule automobile comportant
- une traverse inférieure (1) comportant des bras longitudinaux (11) reliés, grâce à des liaisons (112), à des longerons (111) du véhicule situés au-dessus desdits bras,
- une face avant technique (2) formant une plaque (20),
la plaque (20) présentant une face interne (24) et une face externe (25), et étant destinée à être fixée à un élément de structure (5) du véhicule,
- un convergent de bouclier (3) comportant deux éléments (31, 32) absorbeurs aptes à absorber, par leur déformation, une énergie d'un choc sur le véhicule,
- chaque bras longitudinal (11) de la traverse (1) étant fixé par une première fixation (130) sur la face interne (24) de la plaque (20), et
- chaque élément (31, 32) absorbeur étant fixé par une deuxième fixation (310) sur la face externe (25) de la plaque (20),
de sorte que les deux éléments (31, 32) absorbeurs soient aptes à se déformer selon un axe longitudinal (X) du véhicule lors d'un choc,
le véhicule étant **caractérisé en ce que**
- la face interne (24) comporte
des nervures (241) et
au moins une zone plane (242) présentant un orifice (2421),
- le bras (11) est muni d'une platine (13) comportant un appui (10) comportant au moins une zone plane (12), apte à coopérer avec la zone plane (242) de la face interne (24), et présentant également un orifice (121), le véhicule comportant en outre au moins un boulon (131) comportant une vis (1311) et un écrou (1312) pour former la première fixation (130), la première fixation (130) maintenant en contact étroit la face interne (24) et l'appui (10) grâce à la vis (1311) passant par les orifices (2421, 121), et
- la face externe (25) comporte une zone plane (251) comportant au moins un renfoncement (252) présentant un fond plan correspondant à la zone plane (242) de la face interne (24), de sorte qu'une tête de la vis (1311) soit en retrait par rapport au niveau de la zone plane (251) de la face externe (25).

2. Véhicule selon revendication 1, dans lequel un axe de chaque boulon (131) de la première fixation (130) est un axe longitudinal (X) du véhicule.

3. Véhicule selon la revendication 1 ou 2, dans lequel
- la face externe (25) comporte
au moins une zone plane (251) et
au moins un ergot (253) plan présentant un orifice (2531),
- chaque élément (31, 32) absorbeur comporte
une zone plane (33) apte à coopérer avec la zone plane (251) de la face externe (25) et
au moins une ailette (34) apte à coopérer avec l'ergot (253) et présentant également un orifice (341),
le véhicule comportant en outre au moins un boulon (311) comportant une vis (3111) et un écrou (3112) pour former la deuxième fixation (310), la deuxième fixation (310) maintenant en contact étroit l'ergot (253) et l'ailette (34) grâce à la vis (3111) passant par les orifices (2531, 341), et par conséquent maintenant en contact étroit la face externe (25) et l'élément absorbeur (31, 32).

4. Véhicule selon la revendication 3, dans lequel un axe de chaque boulon (311) de la deuxième fixation (310) est un axe vertical (Z) du véhicule.

5. Véhicule selon l'une des revendications 1 à 4, dans lequel la première fixation (130) et la deuxième fixation (310) ne présentent pas de jeu.

6. Véhicule selon les revendications 1 et 3, dans lequel la tête (3111) de la vis (311) de la première fixation (130) est placée au niveau de la zone plane (33) de l'élément absorbeur (31, 32).

## Patentansprüche

1. Automobil, aufweisend
- eine untere Querstange (1), die Längsarme (11) aufweist, die dank Verbindungen (112) mit Längsträgern (111) des Fahrzeugs, die sich oberhalb der Arme befinden, verbunden sind,
- eine technische Vorderfläche (2), die eine Platte (20) bildet,
wobei die Platte (20) eine Innenfläche (24) und eine Außenfläche (25) aufweist, und die dazu bestimmt ist, an einem Strukturelement (5) des Fahrzeugs befestigt zu werden,
- ein konvergierendes Schildelement (3), das zwei Absorptionselemente (31, 32) aufweist, die durch ihre Verformung eine Energie eines Aufpralls auf dem Fahrzeug absorbieren können,
- wobei jeder Längsarm (11) des Querträgers (1) durch eine erste Befestigung (130) auf der Innenfläche (24) der Platte (20) befestigt ist, und
- jedes Absorptionselement (31, 32) durch eine zweite Befestigung (310) auf der Außenfläche (25) der Platte (20) befestigt ist,
so dass die zwei Absorptionselemente (31, 32) geeignet sind, sich entlang einer Längsachse (X) des Fahrzeugs bei einem Aufprall zu verformen,
Fahrzeug **dadurch gekennzeichnet, dass**
- die Innenfläche (24) Folgendes aufweist:
Rippen (241) und
wenigstens eine flache Zone (242), die eine Öffnung (2421) aufweist,
- der Arm (11) mit einer Platte (13) versehen ist, die eine Auflage (10) aufweist, die wenigstens eine flache Zone (12) aufweist, die geeignet ist, um mit der flachen Zone (242) der Innenfläche (24) zusammenzuwirken und auch eine Öffnung (121) aufweist, wobei das Fahrzeug ferner wenigstens einen Bolzen (131) aufweist, der eine Schraube (1311) und eine Mutter (1312) aufweist, um die erste Befestigung (130) zu bilden, wobei die erste Befestigung (130) die Innenfläche (24) und die Auflage (10) dank der Schraube (1311), die durch die Öffnungen (2421, 121) durchgeht, in enger Berührung hält, und
- die Außenfläche (25) eine flache Zone (251) aufweist, die wenigstens eine Verstärkung (252) aufweist, die einen flachen Boden aufweist, der der flachen Zone (242) der Innenfläche (24) so entspricht, dass ein Schraubenkopf (1311) in Bezug zu der flachen Zone (251) der Außenfläche (25) nach rückwärts versetzt ist.

2. Fahrzeug nach Anspruch 1, bei dem eine Achse jedes Bolzens (131) der ersten Befestigung (130) eine Längsachse (X) des Fahrzeugs ist.

3. Fahrzeug nach Anspruch 1 oder 2, bei dem
- die Außenfläche (25) Folgendes aufweist:
wenigstens eine flache Zone (251) und
wenigstens einen flachen Dorn (253), der eine Öffnung (2531) aufweist,
- jedes Absorptionselement (31, 32) Folgendes aufweist:
eine flache Zone (33), die mit der flachen Zone (251) der Außenfläche (25) zusammenwirken kann, und
wenigstens eine Rippe (34), die mit dem Dorn (253) zusammenwirken kann und ebenfalls eine Öffnung (341) aufweist,
wobei das Fahrzeug außerdem wenigstens einen Bolzen (311) aufweist, der eine Schraube (3111) und eine Mutter (3112) aufweist, um die zweite Befestigung (310) zu bilden, wobei die zweite Befestigung (310) den Dorn (253) und den Flügel (34) dank der Schraube (3111), die durch die Öffnungen (2531, 341) durchgeht, in enger Berührung hält und daher die Außenfläche (25) und das Absorptionselement (31, 32) in enger Berührung hält.

4. Fahrzeug nach Anspruch 3, bei dem eine Achse jedes Bolzens (311) der zweiten Befestigung (310) eine vertikale Achse (Z) des Fahrzeugs ist.

5. Fahrzeug nach einem der Ansprüche 1 bis 4, bei der die erste Befestigung (130) und die zweite Befestigung (310) kein Spiel aufweisen.

6. Fahrzeug nach den Ansprüchen 1 und 3, bei dem der Kopf (3111) der Schraube (311) der ersten Befestigung (130) auf dem Niveau der flachen Zone (33) des Absorptionselements (31, 32) platziert ist.

## Claims

1. Motor vehicle comprising
- a lower crossmember (1) comprising longitudinal arms (11) connected, by connections (112), to side rail members (111) of the vehicle which are situated above said arms,
- a front end module (2) that forms a panel (20),
- the panel (20) having an interior face (24) and an exterior face (25) and being intended to be attached to a structural element (5) of the vehicle,
- a front spoiler convergent (3) comprising two energy-absorbing elements (31, 32) able, by deforming, to absorb the energy of an impact on the vehicle,
- each longitudinal arm (11) of the crossmember (1) being fixed by a first fastener (130) to the interior face (24) of the panel (20), and
- each energy-absorbing element (31, 32) being fixed by a second fastener (310) to the exterior face (25) of the panel (20),
so that the two energy-absorbing elements (31, 32) can deform along a longitudinal axis (X) of the vehicle in the event of an impact,
the vehicle being **characterized in that**
- the interior face (24) has
ribs (241) and
at least one flat region (242) with an orifice (2421),
- the arm (11) is fitted with a mounting plate (13) that has a support (10) comprising at least one flat region (12) able to collaborate with the flat region (242) of the interior face (24) and also having an orifice (121), the vehicle further comprising at least one threaded fastener system (131) comprising a bolt (1311) and a nut (1312) to form the first fastener (130), the first fastener (130) keeping the interior face (24) in close contact with the support (10) by virtue of the bolt (1311) that passes through the orifices (2421, 121), and
- the exterior face (25) has a flat region (251) comprising at least one flat-bottomed indentation (252) corresponding to the flat region (242) of the interior face (24), so that a head of the bolt (1311) is recessed with respect to the flat region (251) of the exterior face (25).

2. Vehicle according to Claim 1, in which an axis of each threaded fastener system (131) of the first fastener (130) is a longitudinal axis (X) of the vehicle.

3. Vehicle according to Claim 1 or 2, in which
- the exterior face (25) comprises
at least one flat region (251) and
at least one flat lug (253) that has an orifice (2531),
- each energy-absorbing element (31, 32) comprises
a flat region (33) able to collaborate with the flat region (251) of the exterior face (25), and
at least one fin (34) able to collaborate with the lug (253) and also having an orifice (341),
the vehicle further comprising at least one threaded fastener system (311) comprising a bolt (3111) and a nut (3112) to form the second fastener (310), the second fastener (31) keeping the lug (253) in close contact with the fin (34) by virtue of the bolt (3111) that passes through the orifices (2531, 341) and therefore keeping the exterior face (25) in close contact with the energy-absorbing element (31, 32).

4. Vehicle according to Claim 3, in which an axis of each threaded fastener system (311) of the second fastener (310) is a vertical axis (Z) of the vehicle.

5. Vehicle according to one of Claims 1 to 4, in which the first fastener (130) and the second fastener (310) incorporate no play.

6. Vehicle according to Claims 1 and 3, in which the head (3111) of the bolt (311) of the first fastener (130) is placed in the flat region (33) of the energy-absorbing element (31, 32).
